# EUROPÄISCHE PATENTSCHRIFT

(11) **EP 3 505 954 B1**
(45) Veröffentlichungstag und Bekanntmachung des Hinweises auf die Patenterteilung: **26.08.2020**
(21) Anmeldenummer: 18203491.8
(22) Anmeldetag: 30.10.2018
(51) Int. Cl.: G01S 7/481, G01S 17/02, H05K 5/00

(54) **KOMPAKTES TIME-OF-FLIGHT-SENSORMODUL**
COMPACT TIME OF FLIGHT SENSOR MODULE
MODULE CAPTEUR DE TEMPS DE VOL COMPACT

(30) Priorität: 29.12.2017 DE 102017131425
(43) Veröffentlichungstag der Anmeldung: 03.07.2019
(73) Patentinhaber: HUF Hülsbeck & Fürst GmbH & Co. KG, 42551 Velbert (DE)
(72) Erfinder: STICHERLING, Nadine, 45257 Essen (DE); KOTT, Christopher, 42109 Wuppertal (DE); WENZEL, Oliver, 40227 Düsseldorf (DE); THAU, Wolfgang, 58285 Gevelsberg (DE)
(74) Vertreter: Zenz Patentanwälte Partnerschaft mbB

(56) Entgegenhaltungen:
- DE-A1-102007 036 775
- DE-A1-102011 119 707
- DE-A1-102014 118 044
- DE-A1-102015 113 841

## Beschreibung

Die Erfindung betrifft ein Time-of-Flight-Sensormodul, abgekürzt TOF-Sensormodul.

Time-of-Flight-Sensoranordnungen, die oft auch unter dem Begriff der Time-of-Flight-Kamera bekannt sind, werden häufig als 3D-Kamerasystem genutzt. Die Funktionsweise der Time-of-Flight-Sensoranordnungen beruht auf der Laufzeitmessung von Licht. Es wird mittels eines Leuchtmittels der Time-of-Flight-Sensoranordnung eine abzubildende Szenerie pulsweise ausgeleuchtet. Das emittierte, an der Szenerie reflektierte und wieder zu der Time-of-Flight-Sensoranordnung gelangte Licht wird erfasst. Die Laufzeit des Lichts wird bestimmt. Aus den ermittelten Laufzeitinformationen wird eine Abbildung der ausgeleuchteten Szenerie berechnet. In vielen Fällen wird zur Erfassung des reflektierten Lichts ein zweidimensionaler Lichtsensor, beispielweise ein CCD-Lichtsensor, genutzt. Auf Basis der zweidimensional erfassten Laufzeitinformationen können dreidimensionale Abbildungen der ausgeleuchteten Szenerie abgeleitet werden.

Time-of-Flight-Sensoranordnungen, oft auch als TOF-Sensoranordnungen abgekürzt, weisen viele Vorteile auf. TOF-Sensoranordnungen sind in konstruktiv vergleichsweise einfacher Weise ausbildbar. Nicht zuletzt können TOF-Sensoranordnungen ohne bewegliche Teile auskommen, was eine hohe Verfügbarkeit und vergleichsweise geringe Anfälligkeit von TOF-Sensoranordnungen für mechanische Schäden begünstigt. Weitere Vorteile von TOF-Sensoranordnungen sind ihre hohe Bilderfassungsgeschwindigkeit und ihre hohe Zuverlässigkeit bei Bilderfassung bei einer Vielzahl von möglichen, abzubildenden, Oberflächen.

TOF-Sensoranordnungen haben, nicht zuletzt aufgrund der oben genannten Vorteile, eine Vielzahl von Anwendungen gefunden. Ein wichtiges Feld der Anwendungen von TOF-Sensoranordnungen ist die Automobilindustrie, insbesondere in den Bereichen der Fahrassistenz- und Sicherheitssysteme. Auch Systeme für Gestenerkennungen werden in vielen Fällen unter Nutzung von TOF-Sensoranordnungen ausgestattet.

Ein Beispiel für ein Sensorsystem zur optischen Erfassung von Objekten und deren räumlichen Bewegungen, aufweisend eine 3D-Kamera, die räumliche Daten mit einem Laufzeitverfahren erfasst und die eine Pulslichtquelle und eine lichtsensitive Empfangseinrichtung umfasst, ist der DE 10 2015 113 841 A1 zu entnehmen.

Vor dem Hintergrund der Nutzung von TOF-Sensoranordnungen in vielen Anwendungen mit teilweise sehr unterschiedlichen Anforderungen besteht der Bedarf nach universell nutzbaren TOF-Sensoranordnungen, die bei möglichst hoher Abbildungsqualität der angefertigten Abbildungen möglichst geringe Bauraumanforderungen aufweisen und dabei effizient und kostengünstig herstellbar sind.

Die Aufgabe wird mit einem Time-of-Flight-Sensormodul mit den Merkmalen des Anspruchs 1 gelöst.

Vorteilhafte Weiterbildungen ergeben sich aus den Unteransprüchen.

Es ist ein Time-of-Flight-Sensormodul vorgesehen. Das Time-of-Flight-Sensormodul umfasst ein Gehäuse mit wenigstens einer Einschuböffnung und einer Schutzfensteranordnung. Das Time-of-Flight-Sensormodul weist einen Moduleinsatz mit einem Verschlussabschnitt und einem Trägerabschnitt auf.

Eine Haltefläche des Verschlussabschnitts liegt an einer Öffnungskante der Einschuböffnung zumindest entlang eines Abschnitts der Öffnungskante des Gehäuses an. Dadurch wird das Gehäuse wenigstens teilweise, bevorzugt vollständig, abgedichtet und mögliche äußere Einflüsse auf die optischen Bestandteile des TOF-Sensormoduls, beispielsweise durch Staubablagerungen, werden reduziert. Das Gehäuse muss durch die an der Öffnungskante anliegende Haltefläche nicht notwendigerweise vollständig abgeschlossen sein, bevorzugt ist jedoch ein vollständig umlaufendes Abdichten des Gehäuses.

Die Haltefläche des Verschlussabschnitts und das Gehäuse bilden durch diese Konstruktion eine Außenhülle des TOF-Sensormoduls. In Fällen, in denen die Haltefläche die

Öffnungskante der Einschuböffnung vollständig abdichtet, ist das Gehäuse, sofern es keine weiteren Öffnungen aufweist, vollständig abgedichtet und somit insbesondere vor Staub geschützt.

An dem Verschlussabschnitt ist ein Trägerabschnitt angeordnet, der sich von der Haltefläche wegweisend in das Gehäuseinnere des Gehäuses hinein erstreckend ausgebildet ist. Der Trägerabschnitt kann in einer bevorzugten Ausführungsvariante einstückig mit dem Verschlussabschnitt ausgebildet sein, aber auch eine mehrteilige Ausführung mit anschließendem Fügen, beispielsweise mittels Form-, Kraft- und/oder Stoffschlusses, kann vorgesehen sein.

An dem Trägerabschnitt ist eine Platinenanordnung angeordnet. Die Platinenanordnung dient der Positionierung der für die eigentliche Funktion des TOF-Sensormoduls erforderlichen Bestandteile sowie gegebenenfalls deren Verbindung miteinander.

Für die eigentliche Funktion des TOF-Sensormoduls weist dieses eine Lichtquelle und einen Lichtsensor auf, die auf der Platinenanordnung angeordnet sind. In einer Weiterbildung kann zusätzlich eine Spotdiode auf der Platinenanordnung vorgesehen sein, mit welcher einem Bediener ein Zielbereich des Lichtsensors mittels Markierens auf einer Unterfläche, wie beispielsweise einem Boden, angezeigt werden kann.

Vor der Lichtquelle ist eine Lichtoptikfassung angeordnet, in der eine Lichtoptik gehalten wird. Vor dem Lichtsensor ist eine Sensoroptikfassung angeordnet, in der eine Sensoroptik gehalten wird. Die relative Ortsangabe "vor der Lichtquelle" beziehungsweise "vor dem Lichtsensor" bezieht sich auf die Funktionalität von Lichtquelle und Lichtsensor, das bedeutet mit anderen Worten, dass die Lichtoptik zwischen der Lichtquelle und dem von der Lichtquelle zu beleuchtenden Bereich angeordnet ist sowie die Sensoroptik zwischen dem Lichtsensor und dem aufzunehmenden Bereich angeordnet ist. Der zu beleuchtende beziehungsweise aufzunehmende, also durch das TOF-Sensormodul zu erfassende, Bereich befindet sich außerhalb des Gehäuses.

Die Schutzfensteranordnung ist an dem Gehäuse derart angeordnet, dass der zu beleuchtende Bereich von der Lichtquelle durch ein Schutzfenster der Schutzfensteranordnung beleuchtet werden kann sowie ein Erfassen von an dem beleuchteten Bereich reflektiertem Licht mit dem Lichtsensor durch ein Schutzfenster der Schutzfensteranordnung möglich ist. Das Schutzfenster oder die Schutzfenster der Schutzfensteranordnung sind derart ausgebildet, dass sie für das für die Detektion vorgesehene verwendete Licht, welches von der Lichtquelle ausgesendet wird, durchsichtig oder größtenteils durchsichtig ist, beispielsweise mit einer Transmissivität von wenigstens 0,9 für wenigstens eine der verwendeten Wellenlängen, bevorzugt für alle der verwendeten Wellenlängen.

Bevorzugt weist das TOF-Sensormodul eine Steuereinrichtung auf, die auf der Platinenanordnung angeordnet ist und mit der Lichtquelle, dem Lichtsensor und/oder der Spot-Diode, sofern vorhanden, gekoppelt ist. Die Steuereinrichtung kann zur Unterstützung einer externen Steuereinrichtung bei Betrieb des TOF-Sensormoduls und/oder bei der Auswertung der erfassten Daten eingerichtet sein. Bevorzugt ist die Steuereinrichtung zur autarken Unterstützung der externen Steuereinrichtung bei Betrieb des TOF-Sensormoduls und/oder bei der Auswertung der erfassten Daten eingerichtet. Als Steuereinrichtung des TOF-Sensormoduls kann beispielsweise ein Mikrocontroller vorgesehen sein.

Die Haltefläche des Moduleinsatzes weist einen Kopplungsdurchlass zur Kopplung des TOF-Sensormoduls mit einer externen Steuereinrichtung beziehungsweise mit einer Elektrizitätsversorgungseinrichtung auf. Der Kopplungsdurchlass dient somit der Zugänglichmachung der elektronischen Komponenten, die sich innerhalb des Gehäuses befinden. Der Verschlussabschnitt umfasst ferner einen Kopplungsstutzen, der den Kopplungsdurchlass umfasst und sich von der Haltefläche ausgehend in eine von dem Gehäuseinneren weg weisende Richtung erstreckt. Der Kopplungsstutzen dient beispielsweise dem Zweck, eine definierte Verbindbarkeit mit auf den Kopplungsstutzen angepasst ausgebildeten Verbindungselementen herbeiführen zu können. Diese können beispielsweise von den Anbietern des TOF-Sensormoduls in Zusammenarbeit mit Nutzern des TOF-Sensormoduls in Absprache aufeinander abgestimmt werden. Auch eine Festlegung der Definitionen von Kopplungsstutzen und passenden komplementären Steckelementen im Rahmen von Normungen ist denkbar.

Das TOF-Sensormodul weist ein Kopplungsglied auf, das sich zumindest mit einem Abschnitt innerhalb des Kopplungsstutzens befindet und dort von dem Gehäuseinneren in Richtung des Gehäuseäußeren erstreckt. Ein weiterer Abschnitt des Kopplungsglieds kann innerhalb des Gehäuseinneren befindlich sein. Das Kopplungsglied weist wenigstens einen Haltekörper auf, der eine erste Steckeranordnung und eine zweite Steckeranordnung trägt. Die erste Steckeranordnung ist in dem Gehäuseinneren mit der Platinenanordnung gekoppelt. Die zweite Steckeranordnung erstreckt sich in dem Gehäuseäußeren in eine vom Gehäuseinneren wegweisende Richtung. Die zweite Steckeranordnung dient der Bereitstellung einer elektronischen Koppelbarkeit der Platinenanordnung beziehungsweise der auf der Platinenanordnung angeordneten Elemente mit außerhalb des Gehäuses vorhandenen Energieversorgungs-, Steuer- und/oder Datenverarbeitungseinrichtungen.

Mit dem Kopplungsglied wird also ein Bauteil bereitgestellt, welches die Steckeranordnungen zur Verbindung der Platinenanordnung (beziehungsweise der auf der Platinenanordnung angeordneten Elemente) mit der Außenwelt trägt. Die Steckeranordnung kann dabei je nach spezieller Ausgestaltung des TOF-Sensormoduls für die Bereitstellung einer Elektrizitätsversorgung, für eine Verbindung mit einem Steuergerät und/oder für die Verbindung mit weiteren Peripheriegeräten vorgesehen sein.

Der Haltekörper des Kopplungsglieds dient der zuverlässigen Positionierung der Steckeranordnung im Inneren des Raums, der gemeinsam von dem Gehäuseinneren und dem Kopplungsstutzen gebildet wird.

Das Kopplungsglied ist durch den Kopplungsdurchlass hindurch geführt und verbindet das Gehäuseinnere und das Gehäuseäußere miteinander. Dadurch wird in besonderem Maße eine Universalität des erfindungsgemäßen Time-of-Flight-Sensormoduls herbeigeführt. Das Kopplungsglied ist ein stofflich von den anderen Bestandteilen des Time-of-Flight-Sensormoduls hergestelltes und vorliegendes Bauteil.

Zwar kann das Kopplungsglied innerhalb des Time-of-Flight-Sensormoduls gefügt sein, beispielsweise formschlüssig positioniert und/oder stoffschlüssig, zum Beispiel mittels Klebens, befestigt sein; wesentlich ist jedoch, dass zur Herstellung des Time-of-Flight-Sensormoduls und dessen Zusammenbau das Kopplungsglied als separates Bauteil vorliegt.

Das Kopplungsglied ist als separat vorliegendes Bauteil konstruiert. Dadurch wird ermöglicht, dass für unterschiedliche Time-of-Flight-Sensormodule jeweils ein speziell angepasstes Kopplungsglied konstruiert und produziert werden kann. Da alle oder zumindest einige weitere Bestandteile des TOF-Sensormoduls potentiell unverändert bleiben, beispielsweise das Gehäuse und der Moduleinsatz, wird mit der Anpassbarkeit des Kopplungsglieds in vorteilhafter Weise ein hohes Maß an Anpassbarkeit des TOF-Sensormoduls mit effizienter und kostengünstiger Herstellung kombiniert.

In einer bevorzugten Weiterbildung des TOF-Sensormoduls ist der Haltekörper derart ausgebildet und positioniert, dass im Gehäuseinneren ein Überlappungsabschnitt des Haltekörpers angeordnet ist, der in eine zur Platinenebene parallele Richtung mit einem Abschnitt der Platinenanordnung überlappt. Wenigstens ein erstes elektrisches Steckerglied der ersten Steckeranordnung erstreckt sich aus dem Überlappungsabschnitt austretend in eine zur Platinenanordnung weisende Richtung in ein Kontaktloch der Platinenanordnung hinein.

Die teilweise überlappende Ausbildung von Platine und Haltekörper bedeutet mit anderen Worten, dass auf einem Platinenbereich der Platinenanordnung eine Normale existiert, die den Haltekörper schneidet. Von diesem Überlappungsabschnitt des Haltekörpers ausgehend erstreckt sich wenigstens ein erstes elektrisches Steckerglied der ersten Steckeranordnung zur Platinenanordnung hin und, bevorzugt lotrecht, in ein Kontaktloch der Platinenanordnung hinein. Dadurch wird eine Kopplung der Platinenanordnung mit der ersten Steckeranordnung und dadurch auch der mit dieser gekoppelten zweiten Steckeranordnung hergestellt.

Bevorzugt ist vorgesehen, dass die Platinenanordnung einen Optikbereich und einen Elektronikbereich aufweist. Der Optikbereich und der Elektronikbereich sind mittels einer Schwenkverbindung mechanisch miteinander verbunden. Dadurch, dass die Platinenanordnung als wenigstens zwei schwenkbar gekoppelte Platinenbereiche aufweist, nämlich dem Optikbereich und dem Elektronikbereich, wird eine besonders platzsparende Anordnung der Platinenanordnung als Bestandteil des TOF-Sensormoduls erreicht. Dadurch, dass eine Schwenkverbindung vorgesehen ist, mit welcher der Optikbereich und der Elektronikbereich miteinander schwenkbar verbunden sind und um welche herum Optikbereich und Elektronikbereich geklappt und klappbar sind, ist die Platinenanordnung besonders platzsparend ausgeführt. Infolge der schwenkbar vorliegenden Platinenanordnung ist die Anordnung der Platinenanordnung innerhalb des Gehäuses modifizierbar, so dass bei konstruktiv unveränderter Platinenanordnung eine Vielzahl konkreter Ausgestaltungen des TOF-Sensormoduls möglich sind. Daraus ergibt sich eine vorteilhafte hohe Flexibilität bei der Anpassung eines TOF-Sensormoduls an unterschiedliche Vorgaben.

Besonders bevorzugt ist die Platinenanordnung derart ausgebildet und in dem Gehäuse angeordnet, dass der Optikbereich an einer ersten Seite des Trägerabschnitts mit dem Trägerabschnitt verbunden ist und der Elektronikbereich an einer zweiten Seite des Trägerabschnitts mit dem Elektronikabschnitt verbunden ist. Dies bedeutet insbesondere, dass der Trägerabschnitt zumindest teilweise zwischen dem Optikbereich und dem Elektronikbereich angeordnet ist.

In einer speziellen Ausgestaltung kann der Trägerabschnitt zwei Haltestreben aufweisen, welche sich von der Haltefläche des Verschlussabschnitts ausgehend und senkrecht auf dieser stehend in das Gehäuse hinein erstrecken. Bevorzugt sind die Haltestreben zwischen den Ebenen angeordnet, in denen Optikbereich und Elektronikbereich liegen. Aber auch andere Ausgestaltungen sind möglich.

Die Lichtoptikfassung und Sensoroptikfassung sowie gegebenenfalls vorhandenen weiteren Optikfassungen wie beispielsweise einer Spot-Diodenoptikfassung werden bevorzugt als Bestandteile eines Optikgestells bereitgestellt und positioniert, das mit dem Optikbereich verbunden ist.

Das Optikgestell ist bevorzugt als einstückiges Bauteil ausgebildet, um einen möglichst zügigen und einfachen Zusammenbau des Sensormoduls zu ermöglichen. Für die Bereitstellung eines möglichst günstigen Optikgestells ist dieses bevorzugt als Kunststoffbauteil ausgebildet.

Gemäß einer bevorzugten Weiterbildung des Sensormoduls weist dieses an seinem Verschlussabschnitt eine unbeweglich am Verschlussabschnitt befestigte oder mit dem Verschlussabschnitt einteilig ausgeführte Positionierungsanordnung auf. Mit Hilfe der Positionierungsanordnung kann der Haltekörper zumindest in einige mögliche Bewegungsrichtungen formschlüssig fixiert werden. Die Form der Positionierungsanordnung kann beispielsweise auf der Grundform einer Fläche, bevorzugt Ebene, basieren, welche abschnittsweise oder vollständig parallel zu einer Platinenebene der Platinenanordnung orientiert ist. Bevorzugt ist die Positionierungsanordnung zwischen dem Optikbereich und dem Elektronikbereich befindlich. Die Positionierungsanordnung weist bevorzugt eine Führungsaufnahme auf, in welche eine korrespondierende Führungsrippe des Haltekörpers eingeführt ist. Alternativ oder zusätzlich weist die Positionierungsanordnung wenigstens ein Halteloch auf, in welches ein, beispielsweise senkrecht zur Positionierungsanordnung orientierter, Haltebolzen des Haltekörpers eingeführt ist.

Mit anderen Worten sind der Haltekörper und die Positionierungsanordnung derart zueinander komplementär ausgebildet, dass eine formschlüssige Positionierung des Haltekörpers herbeigeführt oder zumindest unterstützt wird. Dadurch wird die Relativpositionierung des Haltekörpers zu der Platinenanordnung stabilisiert.

Gemäß einer vorteilhaften Weiterbildung des Sensormoduls weist der Kopplungsstutzen eine Positionierungsausnehmung auf, die sich von der Haltefläche ausgehend entlang eines Abschnitts einer Längserstreckung des Kopplungsstutzens in von dem Gehäuseinneren weg weisender Richtung erstreckt. Dabei ist ein Positionierungsfortsatz des Haltekörpers formschlüssig in der Positionierungsausnehmung angeordnet.

Mit anderen Worten sind der Kopplungsstutzen und der Haltekörper derart komplementär zueinander ausgebildet, dass der Kopplungsstutzen mit einer Ausnehmung des Kopplungsstutzens nämlich der Positionierungsausnehmung, eine komplementäre Ausformung des Haltekörpers, nämlich den Positionierungsfortsatz formschlüssig umfasst. Über die Positionierungsausnehmung trägt der Kopplungsstutzen in Zusammenwirkung mit dem Positionierungsfortsatz somit zu einer formschlüssigen Stabilisierung der Position des Haltekörpers bei, was nicht zuletzt ein vereinfachtes Fügen des TOF-Sensormoduls begünstigt. Insbesondere wird eine Positionsveränderung des Kopplungsglieds verhindert oder zumindest erschwert, was zur Langlebigkeit des TOF-Sensormoduls beiträgt.

Bevorzugt weist der Kopplungsstutzen zwei oder mehr Positionierungsausnehmungen auf, in welche jeweils ein komplementär ausgeformter Positionierungsfortsatz des Haltekörpers angeordnet ist. Besonders bevorzugt ist, dass der Kopplungsstutzen und die Positionierungsfortsätze des Haltekörpers derart aufeinander angepasst ausgeformt und positioniert sind, dass Kopplungsstutzen mit in den Positionierungsausnehmungen eingeführten Positionierungsfortsätzen über eine eventuell vorhandene Krümmung hinaus nur zweidimensionale Mantelflächen aufweisen, die keine Einkerbungen oder Erhabungen aufweisen.

Besonders bevorzugt weist der Kopplungsstutzen mit den eingeführten Positionierungsfortsätzen eine geschlossene Mantelfläche auf, die als Mantelfläche eines Prismas beschrieben werden kann, bevorzugt eines Prismas mit ovaler oder elliptischer, besonders bevorzugt mit runder, Grundfläche.

Bevorzugt ist der Haltekörper einstückig ausgebildet, so dass eine besonders robuste Ausgestaltung vorliegt und eine zuverlässige Positionierung der Steckeranordnungen durch den Haltekörper möglich ist. Besonders bevorzugt ist, dass der Haltekörper basierend auf einem Vorspritzling endgeformt ist. Dadurch kann eine Grundform des Haltekörpers, gegebenenfalls bereits mit in dem Haltekörper eingebrachter erster und zweiter Steckeranordnung, bereitgestellt werden und eine Fertigstellung des Haltekörpers später erfolgen, beispielsweise nachdem eine Anpassung an einen bestimmten Moduleinsatz erforderlich ist. Beispielsweise kann ein Fertigstellen des Haltekörpers basierend auf dem Vorspritzling gemäß einer Ausgestaltung erst nach dem Fügen der Bauteile des TOF-Sensormoduls erfolgen, nachdem der Haltekörper bereits innerhalb des Kopplungsstutzens eingebracht ist.

Als Lichtsensor kann beispielsweise ein CCD-Chip vorgesehen sein. Als Lichtquelle ist bevorzugt eine Laserdiode vorgesehen. Alternativ oder zusätzlich kann eine LED als Lichtquelle genutzt werden.

Weitere Einzelheiten, Merkmale und Vorteile des Gegenstands der Erfindung ergeben sich aus der nachfolgenden Beschreibung im Zusammenhang mit den Zeichnungen. Die Zeichnungen geben beispielhaft ein Ausführungsbeispiel der Erfindung wieder.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind.

Es zeigen:
Figs. 1 bis 2: Teilweise Explosionsdarstellungen und gefügte Darstellungen von Teilen eines Ausführungsbeispiels einer Sensoranordnung eines erfindungsgemäßen TOF-Sensormoduls;
Figs. 3 bis 4: perspektivische Schrägdarstellungen des Moduleinsatzes des TOF-Sensormoduls der Figs. 1 und 2;
Figs. 5 bis 6: perspektivische Darstellungen des Kopplungsglieds des TOF-Sensormoduls der Figs. 1 und 2;
Fig. 7: Gehäuse- und Moduleinsatz des TOF-Sensormoduls der Figs. 1 und 2 in nicht ineinander eingeführter Darstellung;
Fig. 8: TOF-Sensormoduls der Figs. 1 und 2 nach Einführen des Moduleinsatzes in das Gehäuse.

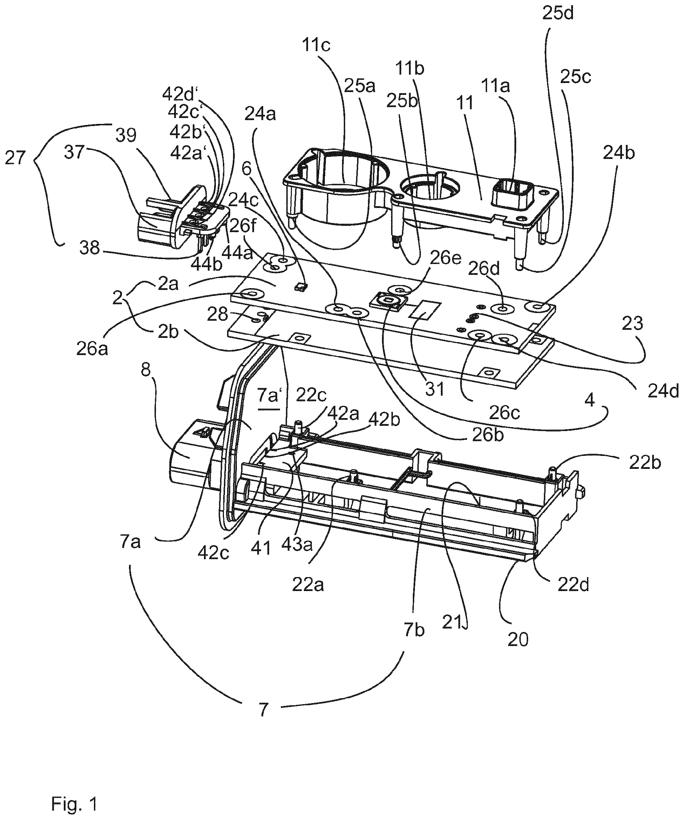

Fig. 1 ist eine Anzahl von Bauelementen einer Ausführungsform eines erfindungsgemäßen Time-of-Flight-Sensormoduls zu entnehmen. Es ist ein Moduleinsatz 7 dargestellt. Der Moduleinsatz 7 weist einen Verschlussabschnitt 7a mit einer Haltefläche 7a' auf, an welcher ein Trägerabschnitt 7b angeordnet ist. Der Trägerabschnitt 7b weist eine erste Seite 21 sowie eine, in der gezeigten Darstellung nicht erkennbare, zweite Seite auf. In der gezeigten Darstellung ist die erste Seite 21 die in bei vorgesehener Betrachtung vorliegender Papierorientierung obere Seite und die zweite Seite die der ersten Seite abgewandten Seite des Trägerabschnitts 7b. Die erste Seite 21 ist diejenige Seite, welche der abzubildenden Szenerie bei Verwendung des Time-of-Flight-Sensormoduls im zusammengefügten Zustand zugewandt ist. Der Trägerabschnitt 7b weist vier Steckstifte 22a, 22b, 22c, 22d auf, wobei die Steckstifte 22a, 22b als Quetschrippen aufweisende Positionierstifte ausgebildet sind. Oberhalb der ersten Seite 21 des Trägerabschnitts 7b ist die Platinenanordnung 2 zu entnehmen. Die Platinenanordnung 2 setzt sich aus dem Optikbereich 2a und dem Elektronikbereich 2b zusammen, die beide als starre Platinenabschnitte ausgebildet sind. In der speziellen Ausgestaltung der gezeigten Ausführungsform sind der Optikbereich 2a und der Elektronikbereich 2b als Rechtecke mit gleichen Abmessungen ausgestaltet.

Der Optikbereich 2a und der Elektronikbereich 2b sind mit einer flexiblen, elektrische Leitelemente aufweisenden, Schwenkverbindung miteinander gekoppelt, die allerdings in der Darstellung der Fig. 1a aus perspektivischen Gründen nicht entnehmbar ist. Auf dem Optikbereich ist ein als CCD-Chip ausgebildeter Lichtsensor 4 sowie eine Spot-Diode 6 angeordnet. Beide sind, wie nach seiner Ankopplung an den Optikbereich auch die Lichtquelle, mit einer auf dem Optikbereich angeordneten und als Mikrocontroller ausgebildeten Steuereinheit 31 gekoppelt. Weiterhin sind Verbindungslöcher 23 zum Anordnen einer Lichtquelle vorgesehen. Der Optikbereich weist ein erstes Steckloch 24a und ein zweites Steckloch 24b auf, die zur Einbringung der Positionierstifte 22a, 22b vorgesehen sind. Die beiden weiteren Stecklöcher 24c, 24d sind zur Aufnahme der Steckstifte 22c, 22d vorgesehen. Entsprechend sind die Stecklöcher 24c, 24d mit einem Durchmesser ausgestattet, welcher signifikant größer ist, beispielsweise 20 Prozent größer, als der Durchmesser der Steckstifte 22c, 22d. Aufgrund des größeren Durchmessers können Positionierungsabweichungen der Steckstifte 22c, 22d und/oder der Stecklöcher 24c, 24d ausgleichen werden. Das Maß der Abweichungen, welche toleriert oder erwartet werden beziehungsweise zum Ausgleich vorgesehen werden, kann in Abhängigkeit von den zugelassenen oder tolerierten Fertigungstoleranzen, den angestrebten Fügegeschwindigkeiten und/oder der angestrebten Fertigungsqualität ausgewählt werden.

Die Platinenanordnung 2a weist in der gezeigten Darstellung bereits die miteinander verklappten Abschnitte Optikbereich 2a Elektronikbereich 2b auf, die parallel zueinander orientiert sind. Der Optikbereich 2a ist zur Verbindung mit einer ersten Seite 21 des Trägerabschnitts 7b und der Elektronikbereich 2b zur Verbindung mit einer der ersten Seite 21 abgewandt orientierten zweiten Seite 20 des Trägerabschnitts 7b ausgebildet. Selbstverständlich wären, wenn es sich bei Fig. 1 nicht um eine Explosionsdarstellung handelte, für ein Fügen von Optikbereich 2a und Elektronikbereich 2b diese zunächst auseinanderzuklappen und nach einem Anordnen eines der beiden an dem Trägerabschnitt 7b wieder die Platinenanordnung um die Schwenkverbindung zu verklappen. Das Verbinden des Optikbereichs 2a und des Elektronikbereichs 2b mit dem Trägerabschnitt 7b bewirkt, dass der Optikbereich 2a an einer (in der gezeigten Betrachtungsrichtung und der bei Betrachtung vorgesehenen Papierorientierung) Oberseite des Trägerabschnitts 7b anliegt und der Elektronikbereich 2b an einer Unterseite des Trägerabschnitts 7b anliegt.

Dadurch ist zumindest ein Abschnitt des Trägerabschnitts 7b in einer zur Ebenennormale des Optikbereichs 2a parallelen Richtung zwischen dem Optikbereich 2a und dem Elektronikbereich 2b angeordnet. Mit anderen Worten liegt zumindest ein Abschnitt des Trägerabschnitts 7b zwischen einer ersten Ebene, die den Optikbereich 2a umfasst und einer zweiten Ebene, die den Elektronikbereich 2b umfasst.

Das in der gezeigten Darstellung als einstückiges Bauteil ausgebildete Optikgestell 11 stellt eine Lichtoptikfassung 11a bereit, in der eine Lichtoptik eingebracht werden kann. Weiterhin sind eine Sensoroptikfassung 11b für eine Sensoroptik und eine Spot-Diodenoptikfassung 11c für eine Spot-Diodenoptik vorhanden. Für das Einführen der verschiedenen Optikelemente sind entsprechende Nuten oder Federn vorgesehen.

Das Optikgestell weist sechs Haltestifte 25a, 25b, 25c, 25d, 25e, 25f auf, von denen in der gewählten Perspektive jedoch nur die Haltestifte 25a, 25b, 25c, 25d erkennbar sind. Zwei der in der gezeigten Ausgestaltung des Optikgestells vorhandenen Haltestifte 25b, 25e weisen Quetschrippen auf. Die Positionen der Haltestifte 25b und 25e sind auf ein Einführen in die korrespondierenden Aufnahmelöcher 26b und 26e abgestimmt. Die Aufnahmelöcher des Optikbereichs sind entsprechend an die Positionierung und Dimensionierung der Haltestifte des Optikgestells angepasst. Mit den Quetschrippen der Haltestifte 25b und 25e wird beim Einführen der Haltestifte des Optikgestells 11 in die Aufnahmelöcher des Optikbereichs 2a eine zumindest auch kraftschlüssige Verbindung zwischen Optikbereich 2a und Optikgestell 11 herbeigeführt. Die Aufnahmelöcher 26a, 26c, 26d und 26f weisen gegenüber den Haltestiften 25a, 25c, 25d, 25f jeweils ein Übermaß auf, beispielsweise von 20 % im Durchmesser. Mittels dieses Übermaßes der Durchmesser der Aufnahmelöcher wird für das Einbringen der Haltestifte eine Positionierungstoleranz bereitgestellt. Eventuelle Abweichungen in den Maßen des Optikgestells lassen sich entsprechend ausgleichen. Trotz des vorhandenen Übermaßes unterstützen die Haltelöcher 26a, 26c, 26d, 26f durch das Einführen der Haltestifte 25a, 25c, 25d, 25f die Positionierung des Optikgestells 11. Je nach konstruktiver Ausgestaltung kann als ergänzende Maßnahme eine Fixierung mit Hilfe unterstützender Befestigungsmittel vorgenommen werden. Beispielsweise können die Haltestifte mit den Aufnahmelöchern verklebt werden, was beispielsweise mit UV-härtendem Kleber effizient herbeigeführt werden kann.

Zusätzlich zu den bereits genannten Elementen ist noch ein Kopplungsglied 27 dargestellt. Das Kopplungsglied 27 wird mit einem ersten Endabschnitt mit dem Elektronikbereich 2b gekoppelt. Ein zweiter Endabschnitt wird in den Kopplungsstutzen 8 des Moduleinsatzes 7 eingeführt zur Bereitstellung einer elektrischen Verbindung von einem Gehäuseinneren zu dem Gehäuseäußeren.

Das Gehäuseinnere endet mit der Haltefläche. Der Kopplungsstutzen selbst und dessen Inneres ist nicht mehr Teil des Gehäuseinneren.

Das Kopplungsglied weist einen Haltekörper 37 auf. Der Haltekörper trägt eine erste Steckeranordnung 38 mit vier Steckelementen, die im zusammengebauten Zustand des TOF-Sensormoduls in dem Gehäuseinneren mit der Platinenanordnung gekoppelt ist. In eine parallel zur Platinenanordnungsebene und senkrecht zu der Haltefläche 7a' und von dieser weg weisend orientierten Richtung sind vier Steckelemente einer zweiten Steckeranordnung 39 an dem Haltekörper 37 angeordnet. Die Steckelemente der ersten Steckeranordnung sind mit den vier Steckelementen der zweiten Steckeranordnung galvanisch gekoppelt, wobei jedes der vier Steckelemente der ersten Steckeranordnung jeweils einem anderen der vier Steckelemente der zweiten Steckeranordnung zugeordnet und mit diesem gekoppelt ist.

An der Gehäuseinnenseitigen Seite der Haltefläche 7a' ist eine Positionierungsanordnung 41 angeordnet. Diese weist zwei Außenebenen auf, die parallel zu dem Optikbereich 2a und dem Elektronikbereich 2b der Platinenanordnung 2 orientiert sind. Die Positionierungsanordnung weist vier als Einkerbungen ausgebildete Führungsaufnahmen 42a, 42b, 42c, 42d auf, von denen in der gezeigten Perspektive nur drei sichtbar sind. Die Führungsaufnahmen 42a, 42b, 42c, 42d sind senkrecht zur Haltefläche 7a' und senkrecht zu einer Mittelachse des Kopplungsstutzens 8 orientiert. Der Haltekörper 37 weist vier komplementär zu den Führungsaufnahmen 42a, 42b, 42c, 42d positionierte und orientierte Führungsrippen 42a', 42b', 42c', 42d', die im zusammengesetzten Zustand des TOF-Sensormoduls von den Führungsaufnahmen 42a, 42b, 42c, 42d aufgenommen sind und infolge des herbeigeführten Formschlusses zumindest in die Richtungen zur stabilen Positionierung des Kopplungsglieds beiträgt, die zu einer Schnittgeraden parallel orientiert sind zwischen einer die Haltefläche 7a' aufweisenden Ebene und einer den Optikbereich 2a aufweisenden Ebene.

Die Positionierungsanordnung 41 weist außerdem zwei Haltelöcher 43a, 43b auf, in welche im zusammengebauten Zustand der TOF-Sensoranordnung 1 zwei Haltebolzen 44a, 44b eingeführt sind.

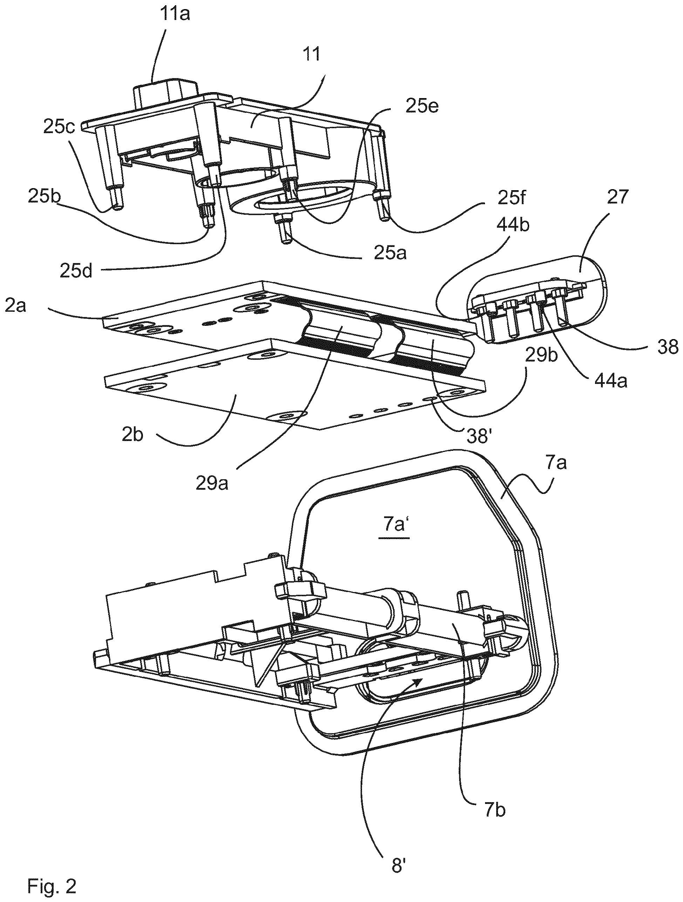

Die Konstellation der Fig. 1 ist in Fig. 2 in einer anderen Perspektive dargestellt. Fig. 2 ist insbesondere noch die Schwenkverbindung 29 zu entnehmen, die aus Schwenkverbindungselementen 29a, 29b ausgebildet ist. Die Schwenkverbindungselemente 29a, 29b sind als dünne, flexible Metallbleche beziehungsweise Metallfolien ausgebildet, wobei optional selbstverständlich auch andere Verbindungselemente vorgesehen sein können, beispielsweise folienverstärkte Schwenkverbindungselemente. Die Schwenkverbindungselemente 29a, 29b weisen jeweils eine elektrische Verbindung zur elektrischen Kontaktierung des Optikbereichs mit dem Elektronikbereich auf.

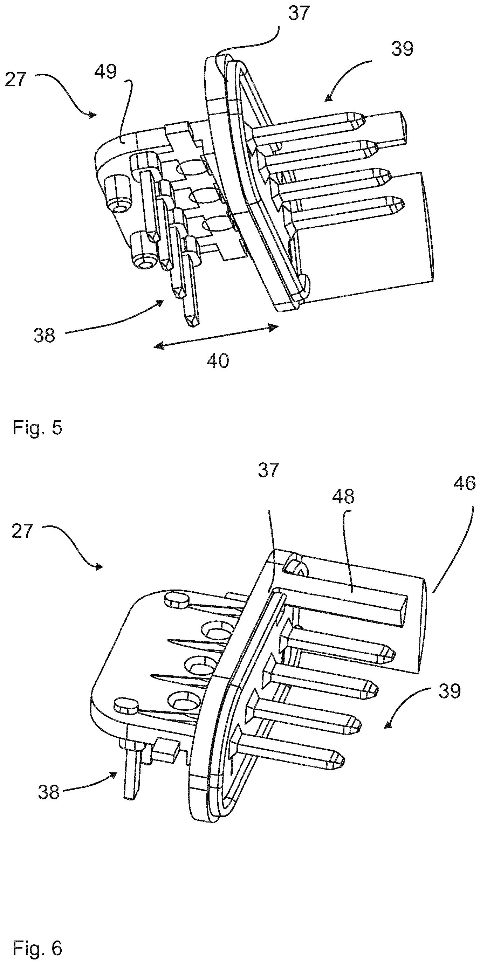

Außerdem ist in Fig. 2 der Kopplungsdurchlass 8' erkennbar, der als in der Haltefläche 7a' angeordnetes Loch ausgebildet ist. In der gezeigten Ausgestaltung ist der Kopplungsdurchlass 8' die Grundfläche eines Prismas, deren Seitenmantel durch den Kopplungsstutzen 8 in Ergänzung mit den eingeführten Positionierungsfortsätzen 46, 48 des Haltekörpers gebildet wird, wie unter anderem in Zusammenhang mit Fig. 5 weiter erläutert ist.

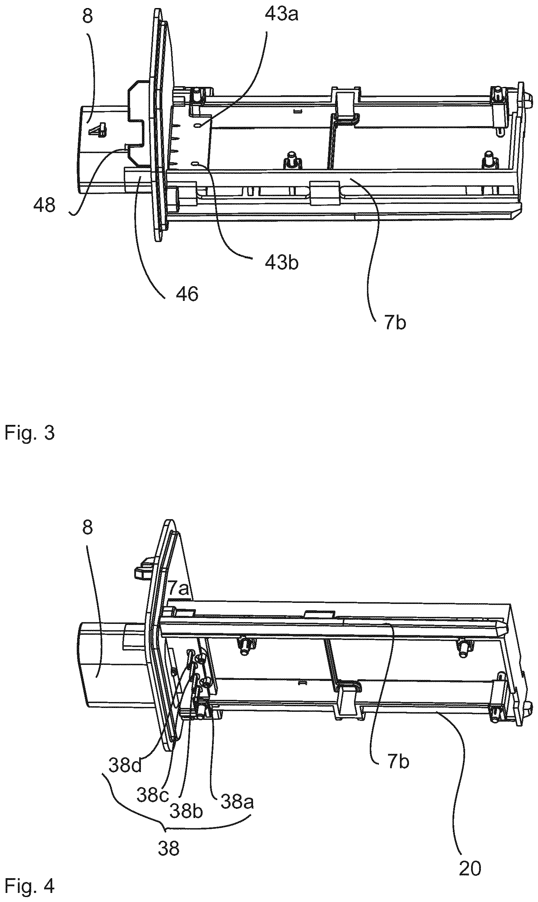

Fig. 3 ist der Moduleinsatz 7 inklusive der Positionierungsanordnung 41 zu entnehmen, die in der gezeigten beispielhaften Ausgestaltung einstückig mit dem Moduleinsatz ausgebildet ist.

In der Darstellung der Fig. 4 ist das Kopplungsglied an seiner vorgesehenen Position eingesetzt. Insbesondere ist ersichtlich, dass die Steckelemente ersten Steckeranordnung 38a, 38b, 38c, 38d der ersten Steckeranordnung derart positioniert sind, dass bei einer Anordnung des Elektronikbereichs an der Unterseite des Trägerabschnitts 7b eine Kopplung der Steckeranordnung 38 mit dem Elektronikbereich erfolgt.

Fig. 5 ist eine vergrößerte Darstellung des Kopplungsglieds 27 zu entnehmen. Es ist der im zusammengebauten Zustand des TOF-Sensormoduls im Gehäuseinneren befindliche Überlappungsabschnitt 40 des Haltekörpers 37 dargestellt. Dieser überlappt innerhalb des Gehäuses einen Abschnitt der Platinenanordnung und ist mit der Fläche 49 parallel zu dem Optikbereich orientiert. Die Steckerglieder der ersten Steckeranordnung 38 erstrecken sich aus dem Überlappungsabschnitt 40 in eine lotrecht zur Platinenanordnung weisenden Richtung.

Fig. 6 ist eine weitere Darstellung des Kopplungsglieds 47 zu entnehmen. Insbesondere ist der erste Positionierungsfortsatz 46 und der zweite Positionierungsfortsatz 48 zu entnehmen. Wie beispielsweise in Fig. 3 ersichtlich, sind die Positionierungsfortsätze 46 und 48 in komplementären Positionierungsausnehmungen 45 und 47 eingebracht, von denen sie formschlüssig aufgenommen sind. Die Positionierungsfortsätze 46, 48 stabilisieren die Positionierung des Kopplungsglieds 47 durch den vorliegenden Formschluss. Dadurch, dass zwei Positionierungsfortsätze 46, 48 vorgesehen sind, wird die Stabilität weiter erhöht, da Drehmomentkräfte mit einer zur Haltefläche 7' senkrechten Drehachse wirksam von den Positionierungsfortsätzen 46, 48 aufgenommen werden.

Die Positionierungsfortsätze sind derart auf den Kopplungsstutzen 8 angepasst, dass bei eingebrachtem Kopplungsglied 27 der Kopplungsstutzen 8 eine geschlossene, zweidimensionale Mantelfläche aufweist, die insbesondere keine Einkerbungen oder Erhabungen aufweist.

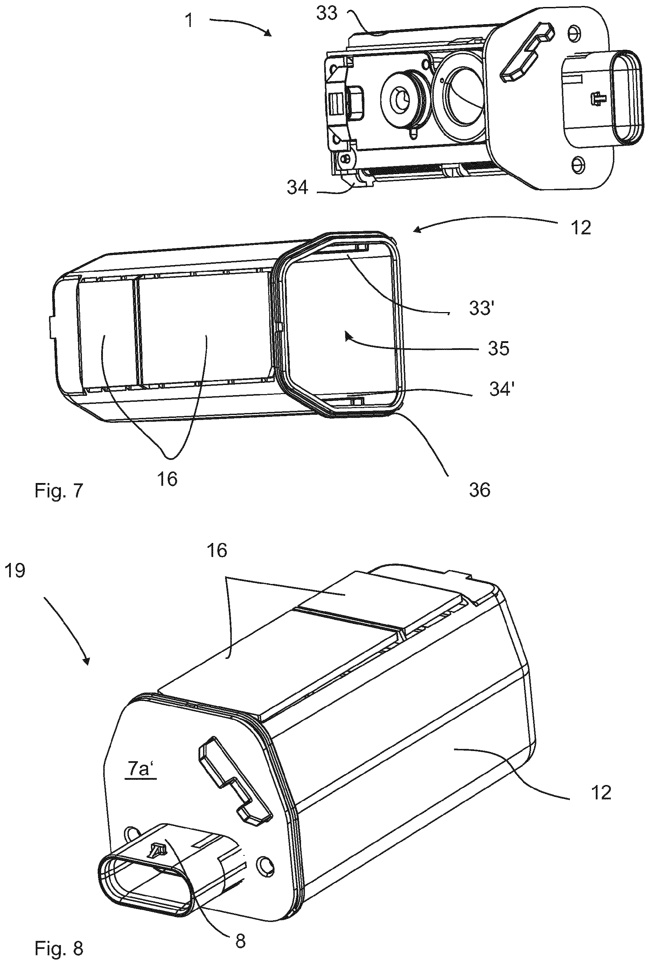

Fig. 7 ist der Moduleinsatz 7 gemeinsam mit dem Gehäuse 12 zu entnehmen. Der Moduleinsatz 7 weist zwei parallel zu der Ebene des Optikbereichs wie auch der Ebene des Elektronikbereichs orientierte Erhabungen 33, 34 auf, die als erste Führungsausformung 33 und als zweite Führungsausnehmung 34 fungieren. Das Gehäuse 12 weist in seinem Gehäuseinneren zwei Führungsspuren 33', 34' auf, die komplementär zu Positionierung und Form der Führungsausformungen 33, 34 ausgebildet sind und beim Einführen des Moduleinsatzes 7 in das Gehäuse 12 dieses haltend unterstützen. Fig. 7 ist außerdem noch eine Schutzfensteranordnung 16 zu entnehmen, welche das Gehäuse 12 zum Schutz der Sensoranordnung 1 abschließt, jedoch zur Gewährleistung der optischen Funktionalität in ausreichendem Maß für Licht zumindest der verwendeten Wellenlängen durchlässig ist.

Fig. 8 ist das Gehäuse mit eingeschobenem Moduleinsatz 7 zu entnehmen. Insbesondere ist zu entnehmen, wie die Haltefläche 7a' das Gehäuse 12 an seiner Gehäuseöffnung diese umlaufend abdichtet.

Es ist denkbar, dass der Verschlussabschnitt 7a eine Gummilippe aufweist, die das Gehäuse 12 umlaufend an der zum Gehäuse 12 zugewandten Seite der Haltefläche 7a' angeordnet ist. Aber auch andere Varianten der Anlage des Verschlussabschnitts an der Haltefläche können vorgesehen sein.

Der Darstellung der Fig. 8 ist ein kompakt vorliegendes, erfindungsgemäßes Time-of-Flight-Sensormodul 19 zu entnehmen, welches als solches mittels Kopplungsstutzens 8 an eine externe Elektronik angeschlossen werden kann und ohne weitere Einrichtungserfordernisse in Betrieb genommen werden kann.

## Patentansprüche

1. Time-of-Flight-Sensormodul (19), abgekürzt: TOF-Sensormodul (19), das aufweist:
- ein Gehäuse (12) mit wenigstens einer Einschuböffnung (35) und einer Schutzfensteranordnung (16),
- einen Moduleinsatz (7) mit einem Verschlussabschnitt (7a) und einem Trägerabschnitt (7b), wobei eine Haltefläche (7a') des Verschlussabschnitts (7a) zumindest abschnittsweise an einer Öffnungskante (36) der Einschuböffnung (35) anliegt und dadurch das Gehäuse (12) wenigstens teilweise abdichtet, und wobei sich der Trägerabschnitt (7b) von der Haltefläche (7a') wegweisend in ein Gehäuseinneres des Gehäuses (12) hinein erstreckt,
- eine Platinenanordnung (2), die an dem Trägerabschnitt (7a) angeordnet ist,
- eine Lichtquelle (10) und einen Lichtsensor (4), die auf der Platinenanordnung angeordnet sind,
- eine vor der Lichtquelle (10) angeordnete Lichtoptikfassung (11a), in der eine Lichtoptik (3) gehalten wird, und eine vor dem Lichtsensor (4) angeordnete Sensoroptikfassung (11b), in der eine Sensoroptik (5) gehalten wird,
wobei die Schutzfensteranordnung (16) an dem Gehäuse (12) derart angeordnet ist, dass ein zu beleuchtender Bereich von der Lichtquelle durch ein Schutzfenster der Schutzfensteranordnung (16) beleuchtet werden kann sowie ein Erfassen von am beleuchteten Bereich reflektiertem Licht mit dem Lichtsensor (4) durch ein Schutzfenster der Schutzfensteranordnung (16) möglich ist,
wobei das Schutzfenster der Schutzfensteranordnung derart ausgebildet ist, dass sie für das für die Detektion vorgesehene verwendete Licht, welches von der Lichtquelle ausgesendet wird, durchsichtig oder größtenteils durchsichtig ist,
wobei
an der Haltefläche (7a') des Verschlussabschnitts (7a) ein Kopplungsdurchlass (8') zur Kopplung des TOF-Sensormoduls (19) mit einer externen Steuereinrichtung und/oder mit einer Elektrizitätsversorgungseinrichtung angeordnet ist,
wobei der Verschlussabschnitt (7a) einen Kopplungsstutzen (8) aufweist, der den Kopplungsdurchlass (8') umfasst und sich von der Haltefläche (7a') ausgehend in eine von dem Gehäuseinneren wegweisende Richtung erstreckt,
wobei das TOF-Sensormodul (19) ein Kopplungsglied (27) aufweist, das sich mit einem ersten Abschnitt innerhalb des Gehäuseinneren und mit einem zweiten Abschnitt innerhalb des Kopplungsstutzens (8) erstreckt, wobei das Kopplungsglied (27) einen Haltekörper (37) aufweist, der eine erste Steckeranordnung (38) trägt, die in dem Gehäuseinneren mit der Platinenanordnung (2) gekoppelt ist und der eine mit der ersten Steckeranordnung (38) galvanisch gekoppelte zweite Steckeranordnung (39) trägt, die sich von einem im Gehäuseäußeren befindlichen Ende des Haltekörpers (37) ausgehend in eine vom Gehäuseinneren wegweisende Richtung erstreckt zur Bereitstellung einer elektronischen Koppelbarkeit der Platinenanordnung (2) mit dem Gehäuseäußeren.

2. Sensormodul (19) nach Anspruch 1, **dadurch gekennzeichnet, dass** ein im Gehäuseinneren befindlicher Überlappungsabschnitt (40) des Haltekörpers (37) sich innerhalb des Gehäuses (12) einen Abschnitt der Platinenanordnung (2) überlappend erstreckt, wobei wenigstens ein erstes elektrisches Steckerglied (38a) der ersten Steckeranordnung (38) sich aus dem Überlappungsabschnitt (40) in eine zur Platinenanordnung (2) weisende Richtung in ein Kontaktloch (38') der Platinenanordnung hinein erstreckt.

3. Sensormodul (19) nach einem der vorhergehenden Ansprüche, **dadurch gekennzeichnet, dass** die Platinenanordnung (2) einen Optikbereich (2a) und einen Elektronikbereich (2b) aufweist, wobei der Optikbereich (2a) und der Elektronikbereich (2b) mittels einer Schwenkverbindung (29) mechanisch miteinander verbunden sind.

4. Sensormodul (19) nach Anspruch 3, **dadurch gekennzeichnet, dass** die Platinenanordnung (2) derart um die Schwenkverbindung (29) verklappt ist, dass der Optikbereich (2a) an einer ersten Seite (21) des Trägerabschnitts (7b) mit dem Trägerabschnitt (7b) verbunden ist und der Elektronikbereich (2b) an einer zweiten Seite (20) des Trägerabschnitts (7b) mit dem Trägerabschnitt (7b) verbunden ist, sodass der Trägerabschnitt (7b) zumindest mit dem zwischen der ersten Seite (21) und der zweiten Seite (20) befindlichen Abschnitt zwischen dem Optikbereich (2a) und dem Elektronikbereich (2b) angeordnet ist.

5. Sensormodul (19) nach Anspruch 4, **dadurch gekennzeichnet**, wobei der Optikbereich (2a) mit einem Optikgestell (11) verbunden ist, welches die Lichtoptikfassung (11a) und die Sensoroptikfassung (11b) aufweist.

6. Sensormodul (19) nach Anspruch 5, **dadurch gekennzeichnet, dass** das Optikgestell (11) als einstückiges Bauteil ausgebildet ist, bevorzugt als einstückiges Kunststoffbauteil.

7. Sensormodul (19) nach einem der vorhergehenden Ansprüche, **dadurch gekennzeichnet, dass** im Gehäuseinneren an dem Verschlussabschnitt (7a) eine Positionierungsanordnung (41) angeordnet ist zum formschlüssigen Fixieren des Haltekörpers (37).

8. Sensormodul (19) nach Anspruch 7, **dadurch gekennzeichnet, dass** die Positionierungsanordnung (41) eine zumindest abschnittsweise parallel zu einer Platinenebene der Platinenanordnung (2) ausgebildete Aufnahmefläche (41) aufweist,
wobei die Aufnahmefläche (41) wenigstens eine Führungsaufnahme (42a, 42b, 42c, 42d) aufweist, in die eine Führungsrippe (42a', 42b', 42c', 42d') des Haltekörpers (37) eingeführt ist und/oder
wobei die Positionierungsanordnung (41) wenigstens ein Halteloch (43a, 43b) aufweist, in das ein Haltebolzen (44a, 44b) des Haltekörpers (37) eingeführt ist.

9. Sensormodul (19) nach einem der vorhergehenden Ansprüche, **dadurch gekennzeichnet, dass** der Kopplungsstutzen (8) des Verschlussabschnitts (7a) eine Positionierungsausnehmung (45) aufweist, die sich von der Haltefläche (7a') ausgehend entlang eines Abschnitts einer Längserstreckung des Kopplungsstutzens (8) in eine von dem Gehäuseinneren wegweisende Richtung erstreckt,
wobei ein Positionierungsfortsatz (46) des Haltekörpers (37) formschlüssig in der Positionierungsausnehmung (45) angeordnet ist.

10. Sensormodul (19) nach Anspruch 9, **dadurch gekennzeichnet, dass** der Kopplungsstutzen (8) wenigstens eine erste Positionierungsausnehmung (45) und eine zweite Positionierungsausnehmung (47) aufweist, wobei die erste Positionierungsausnehmung (45) und die zweite Positionierungsausnehmung (47) nicht in einer gemeinsamen Ebene liegen, und wobei ein komplementär ausgeformter erster Positionierungsfortsatz (46) des Haltekörpers (37) formschlüssig in der ersten Positionierungsausnehmung (45) angeordnet ist und ein komplementär ausgeformter zweite Positionierungsfortsatz (46) des Haltekörpers (37) formschlüssig in der zweiten Positionierungsausnehmung (45) angeordnet ist.

11. Sensormodul (19) nach einem der vorhergehenden Ansprüche, **dadurch gekennzeichnet,**
**dass** der Haltekörper (37) einstückig ist und/oder
**dass** der Haltekörper (37) basierend auf einem Vorspritzling endgeformt ist.

12. Sensormodul (19) nach einem der vorhergehenden Ansprüche, **dadurch gekennzeichnet, dass** die Lichtquelle (10) eine Laserdiode oder eine LED ist und/oder dass der Lichtsensor (4) einen CCD-Chip aufweist.

## Claims

1. A time-of-flight sensor module (19), which is abbreviated as TOF sensor module (19), comprising:
- a housing (12) with at least one insertion opening (35) and a protective window arrangement (16),
- a module insert (7) with a closing section (7a) and a carrier section (7b), wherein a holding surface (7a') of the closing section (7a) at least sectionally abuts on an opening edge (36) of the insertion opening (35) and thereby at least partially seals the housing (12), and wherein the carrier section (7b) extends into a housing interior of the housing (12) in a direction pointing away from the holding surface (7a'),
- a circuit board arrangement (2) that is arranged on the carrier section (7a),
- a light source (10) and a light sensor (4) that are arranged on the circuit board arrangement,
- a light optics holder (11a) that is arranged in front of the light source (10) and in which light optics (3) are held, as well as a sensor optics holder (11b) that is arranged in front of the light sensor (4) and in which sensor optics (5) are held,
wherein the protective window arrangement (16) is arranged on the housing (12) in such a way that a region to be illuminated can be illuminated by the light source through a protective window of the protective window arrangement (16) and light reflected on the illuminated region can be detected with the light sensor (4) through a protective window of the protective window arrangement (16),
wherein the protective window of the protective window arrangement is realized in such a way that it is transparent or largely transparent for the light that is used for the detection and emitted by the light source,
wherein a coupling passage (8') for coupling the TOF sensor module (19) to an external control unit and/or to a power supply unit is arranged on the holding surface (7a') of the closing section (7a),
wherein the closing section (7a) comprises a coupling socket (8) that encompasses the coupling passage (8') and extends from the holding surface (7a') in a direction pointing away from the housing interior,
wherein the TOF sensor module (19) comprises a coupling element (27) that extends within the housing interior with a first section and within the coupling socket (8) with a second section, and wherein the coupling element (27) comprises a holding body (37) that carries a first plug arrangement (38), which is coupled to the circuit board arrangement (2) in the housing interior, and a second plug arrangement (39), which is galvanically coupled to the first plug arrangement (38) and extends from an end of the holding body (37) located in the housing exterior in a direction pointing away from the housing interior in order to make it possible to electronically couple the circuit board arrangement (2) to the housing exterior.

2. The sensor module (19) according to claim 1, **characterized in that** an overlapping section (40) of the holding body (37), which is located in the housing interior, extends within the housing (12) such that it overlaps a section of the circuit board arrangement (2), wherein at least a first electrical plug element (38a) of the first plug arrangement (38) extends from the overlapping section (40) into a contact cavity (38') of the circuit board arrangement in a direction pointing toward the circuit board arrangement (2).

3. The sensor module (19) according to one of the preceding claims, **characterized in that** the circuit board arrangement (2) comprises an optics region (2a) and an electronics region (2b), wherein the optics region (2a) and the electronics region (2b) are mechanically connected to one another by means of a pivot joint (29).

4. The sensor module (19) according to claim 3, **characterized in that** the circuit board arrangement (2) is folded about the pivot joint (29) in such a way that the optics region (2a) is connected to the carrier section (7b) on a first side (21) of the carrier section (7b) and the electronics region (2b) is connected to the carrier section (7b) on a second side (20) of the carrier section (7b) such that the carrier section (7b) is arranged between the optics region (2a) and the electronics region (2b) at least with the section located between the first side (21) and the second side (20).

5. The sensor module (19) according to claim 4, **characterized in that** the optics region (2a) is connected to an optics frame (11) that comprises the light optics holder (11a) and the sensor optics holder (11b).

6. The sensor module (19) according to claim 5, **characterized in that** the optics frame (11) is realized in the form of a one-piece component, preferably a one-piece plastic component.

7. The sensor module (19) according to one of the preceding claims, **characterized in that** a positioning arrangement (41) is arranged in the housing interior on the closing section (7a) in order to fix the holding body (37) in a form-fitting manner.

8. The sensor module (19) according to claim 7, **characterized in that** the positioning arrangement (41) comprises a receiving surface (41) that is at least sectionally realized parallel to a circuit board plane of the circuit board arrangement (2),
wherein the receiving surface (41) comprises at least one guide receptacle (42a, 42b, 42c, 42d), into which a guide rail (42a', 42b', 42c', 42d') of the holding body (37) is inserted and/or
wherein the positioning arrangement (41) comprises at least one holding cavity (43a, 43b), into which a holding bolt (44a, 44b) of the holding body (37) is inserted.

9. The sensor module (19) according to one of the preceding claims, **characterized in that** the coupling socket (8) of the closing section (7a) comprises a positioning recess (45) that extends from the holding surface (7a') in a direction pointing away from the housing interior along a section of a longitudinal extent of the coupling socket (8),
wherein a positioning extension (46) of the holding body (37) is arranged in the positioning recess (45) in a form-fitting manner.

10. The sensor module (19) according to claim 9, **characterized in that** the coupling socket (8) comprises at least a first positioning recess (45) and a second positioning recess (47), wherein the first positioning recess (45) and the second positioning recess (47) do not lie in a common plane, and wherein a first positioning extension (46) of the holding body (37), which has a complementary shape, is arranged in the first positioning recess (45) in a form-fitting manner and a second positioning extension (46) of the holding body (37), which has a complementary shape, is arranged in the second positioning recess (45) in a form-fitting manner.

11. The sensor module (19) according to one of the preceding claims, **characterized in**
**that** the holding body (37) is realized in one piece and/or
**that** the holding body (37) is finish-formed based on a pre-moulded part.

12. The sensor module (19) according to one of the preceding claims, **characterized in that** the light source (10) is a laser diode or an LED and/or that the light sensor (4) comprises a CCD chip.

## Revendications

1. Module capteur de temps de vol (19), en abrégé : module capteur TOF (Time-of-Flight) (19), lequel comporte :
- un boîtier (12) pourvu d'au moins une ouverture d'insertion (35) et d'un ensemble de fenêtres de protection (16),
- un insert modulaire (7) pourvu d'un segment de fermeture (7a) et d'un segment porteur (7b), une surface de maintien (7a') du segment de fermeture (7a) étant adjacente au moins par endroits à une arête d'ouverture (36) de l'ouverture d'insertion (35) et assurant de ce fait au moins l'étanchéité partielle du boîtier (12) et le segment porteur (7b) s'étendant en s'éloignant de la surface de maintien (7a') dans un intérieur de boîtier du boîtier (12),
- un ensemble de cartes de circuits imprimés (2), qui est placé sur le segment porteur (7a),
- une source de lumière (10) et un capteur de lumière (4), qui sont placés sur l'ensemble de cartes de circuits imprimés,
- une monture d'optique lumineuse (11a) placée à l'avant de la source de lumière (10) dans laquelle est maintenue une optique lumineuse (3), et une monture d'optique de capteur (11b) placée à l'avant du capteur de lumière (4), dans laquelle est maintenue une optique de capteur (5),
l'ensemble de fenêtres de protection (16) étant placé sur le boîtier (12), de telle sorte qu'une zone qui doit être éclairée puisse être éclairée par la source de lumière à travers une fenêtre de protection de l'ensemble de fenêtres de protection (16) et qu'une détection de lumière réfléchie sur la zone éclairée à l'aide du capteur de lumière (4) à travers une fenêtre de protection de l'ensemble de fenêtres de protection (16) soit possible,
la fenêtre de protection de l'ensemble de fenêtres de protection étant conçue de sorte à être transparente ou en majeure partie transparente à la lumière utilisée prévue pour la détection, laquelle est émise par la source de lumière,
sur la surface de maintien (7a') du segment de fermeture (7a) étant placé un passage de couplage (8') destiné à coupler le module de capteur TOF (19) avec un système de commande externe et/ou avec un système d'alimentation électrique,
le segment de fermeture (7a) comportant une tubulure de couplage (8), qui entoure le passage de couplage (8') et qui, en partant de la surface de maintien (7a') s'étend dans une direction qui s'éloigne de l'intérieur du boîtier,
le module capteur TOF (19) comportant un organe de couplage (27), qui par un premier segment s'étend dans l'intérieur du boîtier et par un deuxième segment s'étend dans l'intérieur de la tubulure de couplage (8), l'organe de couplage (27) comportant un corps de maintien (37), lequel porte un premier ensemble de connecteurs (38), qui à l'intérieur du boîtier est couplé avec l'ensemble de cartes de circuits imprimés (2) et lequel porte un deuxième ensemble de connecteurs (39) qui est galvaniquement couplé avec le premier ensemble de connecteurs (38), qui en partant d'une extrémité du corps de maintien (37) se trouvant à l'extérieur du boîtier s'étend dans une direction qui s'éloigne de l'intérieur du boîtier, pour mettre à disposition une capacité de couplage électronique de l'ensemble de cartes de circuits imprimés (2) avec l'extérieur du boîtier.

2. Module capteur (19) selon la revendication 1, **caractérisé en ce qu'**un segment de chevauchement (40) du corps de maintien (37) qui se trouve à l'intérieur du boîtier s'étend à l'intérieur du boîtier (12) en chevauchant un segment de l'ensemble de cartes de circuits imprimés (2), au moins un premier organe connecteur (38a) électrique du premier ensemble de connecteurs (38) s'étendant à partir du segment de chevauchement (40) dans une direction montrant vers l'ensemble de cartes de circuits imprimés (2) à l'intérieur d'un trou de contact (38') de l'ensemble de cartes de circuits imprimés.

3. Module capteur (19) selon l'une quelconque des revendications précédentes, **caractérisé en ce que** l'ensemble de cartes de circuits imprimés (2) comporte une zone d'optique (2a) et une zone électronique (2b), la zone d'optique (2a) et la zone électronique (2b) étant mécaniquement assemblées l'une à l'autre au moyen d'un assemblage pivotant (29).

4. Module capteur (19) selon la revendication 3, **caractérisé en ce que** l'ensemble de cartes de circuits imprimés (2) est emboîté autour de l'assemblage pivotant (29) de telle sorte que la zone d'optique (2a) soit assemblée sur un premier côté (21) du segment porteur (7b) avec le segment porteur (7b) et que la zone électronique (2b) soit assemblée sur un deuxième côté (20) du segment porteur (7b) avec le segment porteur (7b), de telle sorte que le segment porteur (7b) soit placé au moins par le segment qui se trouve entre le premier côté (21) et le deuxième côté (20) entre la zone d'optique (2a) et la zone électronique (2b).

5. Module capteur (19) selon la revendication 4, la zone d'optique (2a) étant assemblée avec un support d'optique (11), lequel comporte la monture d'optique lumineuse (11a) et la monture d'optique de capteur (11b).

6. Module capteur (19) selon la revendication 5, **caractérisé en ce que** le support d'optique (11) est conçu sous la forme d'un élément constitutif d'un seul tenant, de préférence d'un élément constitutif d'un seul tenant en matière plastique.

7. Module capteur (19) selon l'une quelconque des revendications précédentes, **caractérisé en ce qu'**à l'intérieur du boîtier, sur le segment de fermeture (7a) est placé un ensemble de positionnement (41), destiné à fixer le corps de maintien (37) par complémentarité de forme.

8. Module capteur (19) selon la revendication 7, **caractérisé en ce que** l'ensemble de positionnement (41) comporte une surface de réception (41) conçue au moins par endroits à la parallèle d'un plan de carte de circuits imprimés de l'ensemble de cartes de circuits imprimés (2),
la surface de réception (41) comportant au moins un logement de guidage (42a, 42b, 42c, 42d) dans lequel est introduite une nervure de guidage (42a', 42b', 42c', 42d') du corps de maintien (37) et/ou
l'ensemble de positionnement (41) comportant au moins un trou de maintien (43a, 43b) dans lequel est introduit un boulon de maintien (44a, 44b) du corps de maintien (37).

9. Module capteur (19) selon l'une quelconque des revendications précédentes, **caractérisé en ce que** la tubulure de couplage (8) du segment de fermeture (7a) comporte un évidement de positionnement (45), qui en partant de la surface de maintien (7a') s'étend le long d'un segment d'une extension longitudinale de la tubulure de couplage (8), dans une direction qui s'éloigne de l'intérieur du boîtier,
un prolongement de positionnement (46) du corps de maintien (37) étant placé par complémentarité de forme dans l'évidement de positionnement (45).

10. Module capteur (19) selon la revendication 9, **caractérisé en ce que** la tubulure de couplage (8) comporte au moins un premier évidement de positionnement (45) et un deuxième évidement de positionnement (47), le premier évidement de positionnement (45) et le deuxième évidement de positionnement (47) ne se situant pas dans un plan commun, et un premier prolongement de positionnement (46) du corps de maintien (37) façonné de manière complémentaire étant placé par complémentarité de forme dans le premier évidement de positionnement (45) et un deuxième prolongement de positionnement (46) du corps de maintien (37) façonné de manière complémentaire étant placé par complémentarité de forme dans le deuxième évidement de positionnement (45).

11. Module capteur (19) selon l'une quelconque des revendications précédentes, **caractérisé**
**en ce que** le corps de maintien (37) est d'un seul tenant et/ou
**en ce que** le corps de maintien (37) est définitivement façonné sur la base d'une ébauche.

12. Module capteur (19) selon l'une quelconque des revendications précédentes, **caractérisé en ce que** la source de lumière (10) est une diode laser ou une LED et/ou **en ce que** le capteur de lumière (4) est une puce CCD.
